(19)

Europäisches
Patentamt

European
Patent Office

Office européen
des brevets

(11) **EP 4 459 696 A2**

(12) **EUROPEAN PATENT APPLICATION**

(43) Date of publication:
**06.11.2024  Bulletin 2024/45**

(21) Application number: **24169128.6**

(22) Date of filing: **09.04.2024**

(51) International Patent Classification (IPC):
*H01M 4/131* (2010.01)    *H01M 4/36* (2006.01)
*H01M 4/38* (2006.01)    *H01M 4/525* (2010.01)
*H01M 4/587* (2010.01)    *H01M 10/0525* (2010.01)

(52) Cooperative Patent Classification (CPC):
**H01M 4/131; H01M 4/36; H01M 4/364;
H01M 4/366; H01M 4/386; H01M 4/525;
H01M 4/587; H01M 10/0525**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **01.05.2023   JP 2023075673**

(71) Applicant: **Prime Planet Energy & Solutions, Inc.
Chuo-ku
Tokyo
103-0022 (JP)**

(72) Inventor: **HANAZAKI, Ryo
Tokyo, 103-0022 (JP)**

(74) Representative: **Kuhnen & Wacker
Patent- und Rechtsanwaltsbüro PartG mbB
Prinz-Ludwig-Straße 40A
85354 Freising (DE)**

(54)    **LITHIUM ION SECONDARY BATTERY**

(57)    The present disclosure relates to a lithium ion secondary battery that comprises a positive electrode, a negative electrode, a separator, and a nonaqueous electrolyte. The positive electrode comprises a positive electrode active material layer that contains a positive electrode active material. The positive electrode active material contains a lithium-transition metal complex oxide having a layered structure in which a Ni containing rate with respect to metal elements other than Li containing Li, Ni, and Mn is equal to or more than 75 mol%. The lithium-transition metal complex oxide is a secondary particle in which primary particles whose aspect ratios are equal to or more than 1.9 are aggregated. The negative electrode comprises a negative electrode active material layer that contains a negative electrode active material. The negative electrode active material contains a carbon material and a Si containing material, and a Si element containing ratio is equal to or more than 5 mass% and not more than 10 mass% when a total amount of the negative electrode active material is treated as 100 mass%.

FIG.3

Processed by Luminess, 75001 PARIS (FR)

**Description**

BACKGROUND

The present disclosure relates to a lithium ion secondary battery.

The lithium ion secondary battery is suitably used as a power supply for driving that is mounted on a Hybrid Electric Vehicle (HEV), Plug-in Hybrid Electric Vehicle (PHEV), and Battery Electric Vehicle (BEV), and a demand of it is rapidly expanding. As a positive electrode active material used on the lithium ion secondary battery, it is possible to use lithium-transition metal complex oxides, and it is possible, among them, to use a lithium nickel cobalt manganese type composite oxide that contains Ni, Co, and Mn as shown in Japanese Unexamined Patent Application Publication No. 2017-191662.

SUMMARY

On the other hand, recently, as the demand of the lithium ion secondary battery is expanding, a depletion of cobalt (Co) used for the lithium ion secondary battery is worried. As a counterplan for the matter described above, it can be thought to decrease a containing rate of Co in a positive electrode active material. However, as a result of an intensive study performed by the present inventor, a problem has been found that, in a case where the containing rate of Co in the positive electrode active material is decreased, increase in an initial resistance of the lithium ion secondary battery and in a resistance at the storing time becomes significant.

A technique disclosed herein has been made in view of the above-described circumstances, and has an object to provide a lithium ion secondary battery in which the cobalt content amount of the positive electrode active material can be decreased and whose initial resistance increase and resistance increase at the storing time are inhibited.

A technique disclosed herein relates to a lithium ion secondary battery, characterized by comprising a positive electrode; a negative electrode; a separator; and a nonaqueous electrolyte, wherein the positive electrode comprises a positive electrode active material layer that contains a positive electrode active material, the positive electrode active material comprises a lithium-transition metal complex oxide that contains Li, Ni, and Mn and that has a layered structure, the lithium-transition metal complex oxide has a containing rate of the Ni equal to or more than 75 mol% with respect to a total of metal elements other than the Li, and is a secondary particle consisted by a primary particle being aggregated, an aspect ratio of the primary particle is equal to or more than 1.9, the negative electrode comprises a negative electrode active material layer that contains a negative electrode active material, the negative electrode active material contains a carbon material and a Si containing material, and when a total amount of the negative electrode active material is treated as 100 mass%, a containing ratio of a Si element in the negative electrode active material is equal to or more than 5 mass% and not more than 10 mass%.

According to the configuration described above, a composition in the positive electrode active material, particularly a containing rate of Ni in the lithium-transition metal complex oxide is set to be within a predetermined range. In addition, the lithium-transition metal complex oxide is a secondary particle, and an aspect ratio of a primary particle of the lithium-transition metal complex oxide is equal to or more than 1.9. Furthermore, as the negative electrode active material, in addition to the carbon material, a predetermined amount of the Si containing material is contained. By doing this, it is possible to provide the lithium ion secondary battery in which a cobalt content amount in the positive electrode active material is decreased and furthermore in which the initial resistance increase and the resistance increase at the storing time are inhibited.

BRIEF DESCRIPTION OF THE DRAWINGS

FIG. 1 is a cross section view that schematically shows an inside structure of a lithium ion secondary battery in accordance with one embodiment.

FIG. 2 is a schematic exploded view that shows a configuration of an electrode body of the lithium ion secondary battery in accordance with one embodiment.

FIG. 3 is a schematic view that shows a configuration of a positive electrode active material in accordance with one embodiment.

FIG. 4 is a schematic view that shows a configuration of a negative electrode sheet (a negative electrode) in accordance with one embodiment.

FIG. 5 is a FIG. 4 correspondence diagram that shows a configuration of the negative electrode sheet (the negative electrode) in accordance with a second embodiment.

## DETAILED DESCRIPTION

Below, while suitably referring to figures, some preferred embodiments of the herein disclosed lithium ion secondary battery will be explained. The matters being other than matters particularly mentioned in this description and being required for implementing the present disclosure (for example, a general configuration and manufacturing process of the lithium ion secondary battery, by which the present disclosure is not characterized) can be grasped as design matters of those skilled in the art based on the related art in the present field. The lithium ion secondary battery disclosed herein can be executed based on the contents disclosed in the present description, and the technical common sense in the present field.

Incidentally, in the following accompanying figures, the members/parts providing the same effect are provided with the same numerals and signs, and overlapped explanation might be omitted or simplified. In addition, a wording "A to B" representing a range in the present description is to semantically cover a meaning of being equal to or more than A and not more than B, and further cover meanings of being "preferably more than A" and "preferably less than B". Additionally, in the present description, a term "lithium ion secondary battery" (below, which might be referred to as simply "battery") means a whole range of electric storage devices in which lithium ion is used as a charge carrier and in which repeatedly charging and discharging can be implemented by movement of the electric charge according to the lithium ion between positive and negative electrodes.

Below, the present disclosure would be described in detail while the lithium ion secondary battery, including an electrode body formed in a flat shape and a battery case formed in a flat shape and being formed in a flat square shape, is treated as an example, but it is not intended that the present disclosure is restricted to contents described in the embodiment.

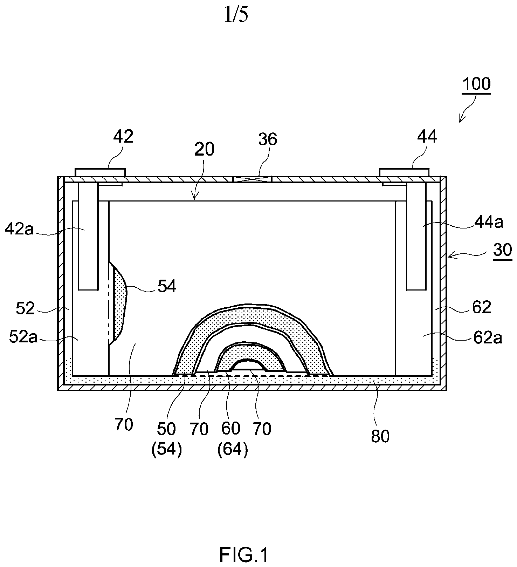

FIG. 1 is a cross section view that schematically shows an inside structure of the lithium ion secondary battery in accordance with one embodiment. The lithium ion secondary battery 100 shown in FIG. 1 is a sealed battery constructed by accommodating an electrode body 20 formed in a flat shape and a nonaqueous electrolyte 80 into a battery case (in other words, an exterior container) 30 formed in a flat square shape. The battery case 30 is provided with a positive electrode terminal 42 and a negative electrode terminal 44 which are used for outside connection, and is provided with a thin-walled safe valve 36 which is set to release an internal pressure when the internal pressure of the battery case 30 rises to a predetermined level or more. In addition, the battery case 30 is provided with an injection port (not shown in figures) for injecting a nonaqueous electrolyte 80. The positive electrode terminal 42 is electrically connected to a positive electrode current collection plate 42a. The negative electrode terminal 44 is electrically connected to a negative electrode current collection plate 44a. As a material of the battery case 30, for example, a metal material having a lightweight and having a good thermal conductivity, such as aluminum, can be used.

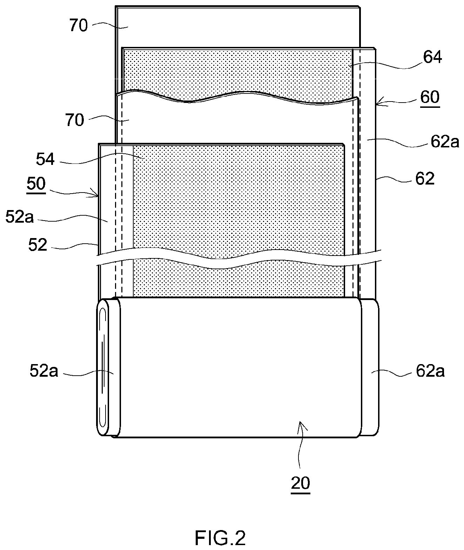

FIG. 2 is a schematic exploded view that shows a configuration of the electrode body of the lithium ion secondary battery in accordance with one embodiment. The electrode body 20 has a form, as shown in FIG. 1 and FIG. 2, in which a positive electrode sheet 50 formed in a strip-like shape and a negative electrode sheet 60 formed in a strip-like shape are stacked one on another through two separators 70 respectively formed in strip-like shapes and then are wound therein in a longitudinal direction. The positive electrode sheet 50 has a configuration in which a positive electrode active material layer 54 is formed on one surface or both surfaces (here, both surfaces) of a long positive electrode current collector 52 along a longitudinal direction. The negative electrode sheet 60 has a configuration in which a negative electrode active material layer 64 is formed on one surface or both surfaces (here, both surfaces) of a long negative electrode current collector 62 along the longitudinal direction. A positive electrode active material layer non-formation part 52a (in other words, a portion on which the positive electrode active material layer 54 is not formed and thus the positive electrode current collector 52 is exposed) and a negative electrode active material layer non-formation part 62a (in other words, a portion on which the negative electrode active material layer 64 is not formed and thus the negative electrode current collector 62 is exposed) are formed to protrude outwardly from both ends in a winding axis direction of the electrode body 20 (in other words, a sheet width direction orthogonal to the longitudinal direction described above). The positive electrode active material layer non-formation part 52a and the negative electrode active material layer non-formation part 62a are respectively joined to the positive electrode current collection plate 42a and the negative electrode current collection plate 44a. Incidentally, the positive electrode sheet 50 is an example of the herein disclosed "positive electrode", and the negative electrode sheet 60 is an example of the herein disclosed "negative electrode".

<Positive electrode>

The herein disclosed positive electrode (the positive electrode sheet 50) includes the positive electrode active material layer 54. As shown in FIG. 2, the positive electrode (the positive electrode sheet 50) herein includes the positive electrode current collector 52 and the positive electrode active material layer 54 supported by the positive electrode current collector 52. Incidentally, in the present practical example, the positive electrode active material layer 54 is shown, in figures, only on a surface at one side of the positive electrode current collector 52, but the positive electrode active material layer 54 might be provided on each of surfaces at both sides of the positive electrode current collector 52.

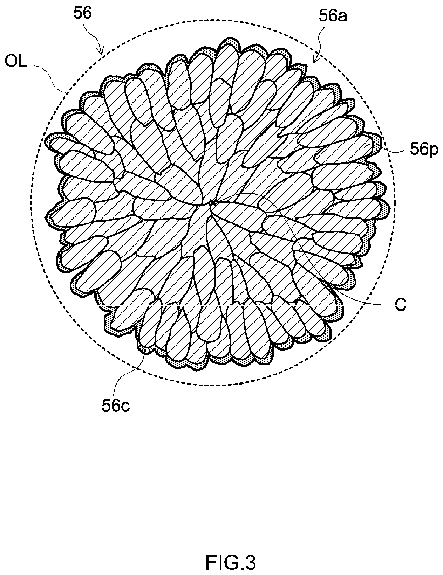

FIG. 3 is a schematic view that shows a configuration of the positive electrode active material 56 in accordance with one embodiment. The positive electrode active material layer 54 contains the positive electrode active material 56 that can reversibly store and release a charge carrier. The positive electrode active material 56 in accordance with the present embodiment includes a lithium-transition metal complex oxide 56a, which becomes a base material, and includes a covering part 56c, which is arranged on at least one part of a surface of the lithium-transition metal complex oxide 56a. The covering part 56c is typically arranged on the lithium-transition metal complex oxide 56a by a physical and/or chemical bonding.

The lithium-transition metal complex oxide 56a in accordance with the present embodiment has a layered structure, and contains lithium (Li), nickel (Ni), and manganese (Mn), as essential elements. The lithium-transition metal complex oxide 56a in accordance with the present embodiment is a so-called high Ni containing lithium-transition metal complex oxide in which a Ni containing rate, with respect to metal elements other than the Li, is equal to or more than 75 mol%. Incidentally, the high Ni containing lithium-transition metal complex oxide is an example of the herein disclosed "lithium-transition metal complex oxide in which a Ni containing rate, with respect to a total of metal elements other than the Li, is equal to or more than 75 mol%".

The positive electrode active material might contain the positive electrode active material other than the lithium-transition metal complex oxide 56a within a range where effects of the present disclosure are not inhibited (for example, less than 10 mass%, or preferably equal to or less than 5 mass%, with respect to a total mass of the positive electrode active material). In addition, the positive electrode active material might be configured only from the lithium-transition metal complex oxide 56a.

From a perspective of a high volume energy density of the lithium ion secondary battery, regarding the lithium-transition metal complex oxide 56a, the Ni containing rate with respect to the total of metal elements other than the Li is preferably equal to or more than 80 mol%, or further preferably equal to or more than 90 mol%. On the other hand, from a perspective of a high stability, the Ni containing rate with respect to the total of metal elements other than the Li is preferably equal to or less than 95 mol%, or further preferably equal to or less than 90 mol%.

As the lithium-transition metal complex oxide 56a having the layered structure, for example, it is possible to use a lithium nickel manganese type composite oxide, a lithium nickel cobalt manganese type composite oxide, a lithium nickel cobalt aluminum type composite oxide, a lithium iron nickel manganese type composite oxide, or the like. Regarding them, one kind might be used singly, or 2 or more kinds might be combined and then used. Whether a particle of the high Ni containing lithium-transition metal complex oxide has the layered structure (in other words, a layered crystal structure) can be confirmed by a well-known method (for example, an X-ray diffraction method, or the like).

Incidentally, "lithium nickel cobalt manganese type composite oxide" in the present description is a term that semantically covers not only oxides in which Li, Ni, Co, Mn, and O are configuration elements, but also an oxide containing 1 kind of or 2 or more kinds of additive elements other than them. As an example of the additive element described above, it is possible to use a transition metal element, a typical metal element, or the like, such as Mg, Ca, Al, Ti, V, Cr, Y, Zr, Nb, Mo, Hf, Ta, W, Na, Fe, Zn, and Sn. In addition, the additive element might be a semimetal element, such as B, C, Si, and P, or might be a non-metallic element, such as S, F, Cl, Br, and I. This thing is similar to the above described lithium nickel type composite oxide, lithium cobalt type composite oxide, lithium nickel manganese type composite oxide, lithium nickel cobalt aluminum type composite oxide, lithium iron nickel manganese type composite oxide, or the like.

In some suitable aspects, it is preferable that the lithium-transition metal complex oxide 56a has a composition represented by general Chemical formula (i) described below.

$$\text{Li}_\alpha\text{Ni}_x\text{Mn}_y\text{M}_z\text{O}_2 \ ... \qquad \text{Chemical formula (i)}$$

In Chemical formula (i), x, y, z, and $\alpha$ respectively satisfy $0.8 \leq \alpha \leq 1.2$, $0.75 \leq x \leq 0.95$, $0.05 \leq y \leq 0.25$, and $0 \leq z \leq 0.2$, and satisfy $x + y + z = 1$. In Chemical formula (i), M represents at least one kind of element, selected from a group consisting of Mg, Ca, Co, Al, Ti, V, Cr, Zr, Nb, Mo, Hf, Ta, and W.

In Chemical formula (i), $\alpha$ preferably satisfies $0.9 \leq \alpha \leq 1.2$, or further preferably satisfies $1.0 \leq \alpha \leq 1.1$. From a perspective of a battery characteristic (for example, an energy density, a cycle characteristic, and a heat stability), x preferably satisfies $0.8 \leq x \leq 0.95$, or further preferably satisfies $0.8 \leq x \leq 0.9$. For example, from a perspective of the energy density, the heat stability, and a cost, y preferably satisfies $0.1 \leq y \leq 0.25$, or further preferably satisfies $0.17 \leq y \leq 0.25$. Then, z preferably satisfies $0 \leq z \leq 0.1$, further preferably satisfies $0 \leq z \leq 0.03$, or is furthermore preferably 0. Incidentally, in Chemical formula (i), the wording "x + y + z = 1" not only means that x + y + z is 1, but also semantically covers that x + y + z is substantially recognized as 1 if the effect of the herein disclosed technique can be implemented, and thus it might be typically x + y + z = 0.95 to 1.1 or might be preferably x + y + z = 0.99 to 1.05.

In some suitable aspects, it is preferable that the lithium-transition metal complex oxide 56a contains the W. In other words, the lithium-transition metal complex oxide 56a is preferably to have the W being doped as the additive element. By doing this, the layered structure of the lithium-transition metal complex oxide 56a becomes stable, it is possible not only to further suitably improve the initial resistance, but also to suppress an elution of Mn to the nonaqueous electrolyte, so as to further suitably obtain a suppressing effect of a resistance increase at a storing time. In a case where the W is doped (becomes in a solid solution form) as the additive element to the lithium-transition metal complex oxide 56a, with respect to the total of transition metal elements of the lithium-transition metal complex oxide 56a other than the W, 0.1 to 0.5 mol% dope is preferable or 0.1 to 0.3 mol% dope is further preferable.

Regarding the lithium-transition metal complex oxide 56a, it is preferable that a content amount (mol) of Co elements and a content amount (mol) of Mn elements satisfy a relation described below:

$$0 \leq \mathrm{Co/Mn} \leq 0.42.$$

By doing this, it is possible to suitably control a containing ratio of the Co element and the Mn element in the positive electrode active material. Incidentally, under the relation described above, as a value of Co/Mn becomes smaller, it is possible to suitably decrease the cobalt content amount in the lithium-transition metal complex oxide 56a and further to suppress the resistance increase at the storing time, and thus $0 \leq \mathrm{Co/Mn} \leq 0.25$ is further preferable, or $0 \leq \mathrm{Co/Mn} \leq 0.21$ is furthermore preferable.

Regarding the lithium-transition metal complex oxide that is used for the conventional lithium ion secondary battery, a containing ratio of the Co element with respect to metal elements other than the Li is typically about 10 mol% to 40 mol%. However, as the cobalt resource is limited, it is preferable in the present embodiment that the containing rate of the Co of the lithium-transition metal complex oxide 56a is decreased in comparison to a conventional one. Accordingly, in some suitable aspects, the Co containing ratio with respect to the total of metal elements other than the Li is, for example, preferably equal to or less than 5 mol%, further preferably equal to or less than 3 mol%, or furthermore preferably 0 mol% (in other words, Co free).

As shown in FIG. 3, the lithium-transition metal complex oxide 56a is in a secondary particle form where plural primary particles 56p are typically aggregated by a physical or chemical bonding force. A number of the primary particles 56p of the lithium-transition metal complex oxide 56a configuring the secondary particle of the lithium-transition metal complex oxide 56a, which is not particularly restricted, might be, for example, approximately equal to or more than 10, might be, preferably, approximately equal to or more than 30, or might be, further preferably, approximately equal to or more than 50. The number of the primary particles 56p, which is not particularly restricted, might be, for example, approximately equal to or less than 120. Incidentally, the term "primary particle" in the present description represents a minimum unit of the particle configuring the positive electrode active material, and particularly represents a unit being minimum that has been decided on the basis of an apparent geometric form recognized under an electron microscope observation. Additionally, in the present description, a mass in which 10 or more primary particles 56p described above aggregate is referred to a "secondary particle".

In the present embodiment, the primary particle 56p is formed in a so-called long shape whose aspect ratio (a long-diameter/short-diameter ratio) is equal to or more than 1.9. By doing this, the initial resistance is suitably improved. Regarding the primary particle 56p in accordance with the present embodiment, typically, a long diameter extends in approximately parallel to a direction (an *a* axis) orthogonal to a laminate direction (a c axis) of the lithium-transition metal complex oxide formed in a layer shape. Regarding the primary particle 56p in accordance with the present embodiment, typically, a short diameter is in approximately parallel to the laminate direction (the c axis). Although not particularly restricted, an upper limit of the aspect ratio of the primary particle 56p is, for example, preferably equal to or less than 2.5 or further preferable equal to or less than 2.2.

Incidentally, in the present description, the term "aspect ratio of the primary particle" represents a long-diameter/short-diameter ratio of the primary particle 56p configuring the lithium-transition metal complex oxide 56a. The aspect ratio of the primary particle can be grasped from a cross section electron microscope image of the lithium-transition metal complex oxide 56a and represents an average value of the long-diameter/short-diameter ratios of arbitrary-selected plural primary particles 56p. Regarding the plural primary particles 56p, for example, it might be equal to or more than 20. In particular, regarding the average particle diameter of the primary particle 56p, for example, by performing a cross section polisher processing, a specimen for cross section observation of the lithium-transition metal complex oxide 56a is manufactured. Next, the scanning electron microscope (SEM) is used to obtain the SEM image of the specimen for cross section observation of the lithium-transition metal complex oxide 56a. Then, it is possible that an image analyzing type particle size distribution measuring software (for example, "Mac-View") is used to calculate the aspect ratio (a ratio with the long diameter and the short diameter) based on the long diameters and the short diameters of the plural primary particles 56p arbitrarily selected from the SEM image, so as to obtain the arithmetic average value.

An average particle diameter of the primary particle 56p of the lithium-transition metal complex oxide 56a is not particularly restricted. For example, from a perspective of a high output characteristic of the positive electrode active material 56 and of a cycle characteristic, the average particle diameter of the primary particles 56p of the lithium-transition metal complex oxide 56a could be, for example, 0.1 $\mu$m to 2.5 $\mu$m, preferably equal to or more than 1.0 $\mu$m, further

preferably equal to or more than 1.3 μm, or furthermore preferably equal to or more than 1.9 μm. On the other hand, from a perspective of the higher output characteristic of the positive electrode active material 56 and the cycle characteristic, the average particle diameter of the primary particles 56p of the lithium-transition metal complex oxide 56a is preferably equal to or less than 2.2 μm, or further preferably equal to or less than 2.1 μm. Incidentally, the wording "average particle diameter of the primary particles of the lithium-transition metal complex oxide" represents an average particle diameter of long diameters of the primary particles 56p of the lithium-transition metal complex oxide 56a. By using a method similar to the above described aspect ratio of the primary particle, it is possible to obtain each of the long diameters of the plural primary particles 56p arbitrarily selected from the SEM image, and then calculate the average value, so as to obtain it.

As shown in FIG. 3, the primary particle 56p in accordance with the present embodiment is, typically, in the lithium-transition metal complex oxide 56a (the secondary particle), arranged to extend from a center C to an outer diameter OL (so as to be radially oriented). One of end parts of a long side of the primary particle 56p is arranged at the outer diameter OL side and the other one of end parts is arranged at the center C side. In other words, the a axis of the primary particle 56p is arranged to extend from the center C to the outer diameter OL.

The primary particle 56p and the secondary particle in accordance with the present embodiment can be manufactured by a conventionally known method (for example, crystallization method, or the like). Although not particularly restricted, manufacturing methods of the primary particle 56p and the secondary particle as described above can be manufactured, for example, by a conventionally known crystallization method. At first, a hydroxide being a precursor of the lithium-transition metal complex oxide, in which the primary particle is radially oriented, is manufactured. This hydroxide normally contains a metal element other than lithium among the metal elements contained in the lithium-transition metal complex oxide. When the hydroxide is generated, a chemical compound (for example, ammonia) containing ammonium ion is used as an alkaline compound. At that time, by adjusting pH, $NH_3$ concentration, and response time, it is possible to control an aspect ratio (a long diameter and a short diameter of the primary particle 56p) and the arrangement of the primary particle 56p. It is good to make the $NH_3$ concentration in the response liquid be equal to or less than 2 wt%, for example, or 1 to 2 wt%. It is good to make the pH in the response liquid be approximately 10.5 to 12. It is good to make the response time be approximately 20 to 40 hours. Then, the obtained hydroxide and the chemical compound (for example, lithium hydroxide, or the like) being a lithium source are mixed and then baked. At that time, by adjusting the baking temperature at the baking time and the baking period, it is possible to suitably control formation of the secondary particle of the lithium-transition metal complex oxide 56a. Incidentally, the baking temperature is not particularly restricted, but might be, for example, 700°C to 800°C. In addition, the baking period is not particularly restricted, but might be, for example, 10 hours to 20 hours. By doing this, as illustrated in FIG. 3, it is possible to obtain the secondary particle of the lithium-transition metal complex oxide 56a in accordance with the present embodiment in which the long primary particle 56p is radially oriented.

As shown in FIG. 3, in some suitable aspects, on at least one part of a surface of the lithium-transition metal complex oxide 56a, the covering part 56c can be arranged. However, the covering part 56c is not essential, and might be omitted in some embodiments. It is preferable that the covering part 56c contains a boron compound. By making the boron compound as the covering part 56c be arranged on the surface of the lithium-transition metal complex oxide 56a, the Mn elution from the lithium-transition metal complex oxide 56a to the nonaqueous electrolyte 80 is inhibited, and thus it is possible to inhibit the resistance increase at the storing time. Additionally, in the positive electrode active material 56, by including the covering part 56c, it is possible to enhance the bonding force between the primary particle 56p and another primary particle. By doing this, it is possible to mitigate a stress at an expansion-contraction time, so as to suppress particle cracking of the lithium-transition metal complex oxide 56a. Further from this perspective, it is additionally possible to suitably suppress the resistance increase at the storing time. As the boron compound, for example, a boron containing oxide or an oxide containing boron and lithium is preferable, or a lithium borate salt is particularly preferable. As a specific example of the boron compound, it is possible to use $LiBO_2$, $LiB(OH)_4$, $Li_3BO_3$, $B_2O_3$, or the like, and in particular, $LiBO_2$ can be used suitably. A rate of the boron compound as the covering part 56c could be, based on a boron (B) conversion in which a total amount of metal elements other than the Li in the positive electrode active material is treated as 100 mol%, for example, 0.5 to 2.0 mol%, or is preferably 0.7 to 1.5 mol%.

In some suitable aspects, the covering part 56c might further contain aluminum oxide ($Al_2O_3$), in addition to the boron compound. More specifically, the aluminum oxide has a function of trapping hydrogen fluoride gas (hydrochloric acid) that is generated in response to decomposition of the nonaqueous electrolyte 80. By doing this, it is possible to inhibit the elution of Mn into the nonaqueous electrolyte 80 caused by a response with the positive electrode active material 56 (the lithium-transition metal complex oxide 56a) and the hydrogen fluoride gas. Accordingly, by arranging the covering part 56c further containing aluminum oxide in addition to the boron compound on the surface, it is possible to further suitably inhibit the resistance increase at the storing time. A rate of the aluminum oxide as the covering part 56c, based on an aluminum (Al) conversion in which the total amount of the metal elements other than the Li in the lithium-transition metal complex oxide 56a is treated as 100 mol%, could be, for example, 0.1 to 0.5 mol%, or is preferably 0.3 to 0.5 mol%.

It is preferable that the covering part 56c is arranged at least on the surface of the secondary particle of the lithium-transition metal complex oxide 56a. At that time, a covered rate of the positive electrode active material 56 by the covering part 56c might be equal to or more than 60%. Incidentally, whether the covering part 56c is arranged on the surface of the secondary particle and the rate (a covered rate) of a portion covered by the covering part 56c can be confirmed, for example, by performing a XPS (X-ray Photoelectron Spectroscopy) analysis on the positive electrode active material 56.

In a case where the lithium-transition metal complex oxide 56a includes a void, it is preferable that the covering part 56c exists, not only on the surface of the secondary particle or instead of the surface of the secondary particle, at an inside of the secondary particle. In particular, it is preferable that the covering part 56c exists on the surface of the primary particle 56p inside the secondary particle. An amount of the covering part 56c existing inside the secondary particle might be more or less than an amount of the covering part 56c existing on the surface of the secondary particle. By doing this, it is possible to exhibit the effect of the herein disclosed technique at a higher level. Incidentally, whether the covering part 56c exists inside the secondary particle can be confirmed by performing a LA-ICP-MS (Laser Ablation Inductively Coupled Plasma Mass Spectrometry) analysis.

An average particle diameter (D50) of the lithium-transition metal complex oxide 56a (secondary particle) is not particularly restricted. From a perspective of a particularly high filling ability of the positive electrode active material layer 54 and a high volume energy density of the lithium ion secondary battery 100, the average particle diameter (D50) of the lithium-transition metal complex oxide 56a (the secondary particle) is preferably 5 $\mu$m to 30 $\mu$m, or further preferably 10 $\mu$m to 20 $\mu$m.

Incidentally, in the present description, the term "average particle diameter (D50) of the lithium-transition metal complex oxide (the secondary particle)" represents a median diameter (D50) and means a particle diameter corresponding to a cumulative frequency 50 volume% from a side of a microparticle whose particle diameter is smaller, on a volume basis particle size distribution based on a laser-diffraction_scattering method. Thus, it is possible to obtain the average particle diameter (D50) of the lithium-transition metal complex oxide (the secondary particle) by using a laser-diffraction_scattering type particle size distribution measuring apparatus, or the like.

In the present embodiment, the lithium-transition metal complex oxide 56a can have a so-called solid structure in which the primary particles 56p simply aggregate so as to configure a secondary particle. However, as it is not restricted to this, the lithium-transition metal complex oxide 56a can include the void derived from a gap between the primary particles 56p having aggregated inside the secondary particle. Incidentally, the void might be open or might be not-open. In a case where the void is open, one void might include 2 or more opening parts. The void is, in a cross section view, positioned inside a virtual outer diameter OL of the secondary particle, and is typically a space surrounded by plural primary particles 56p.

In a case where the lithium-transition metal complex oxide 56a (the secondary particle) includes the void, it is preferable that the void rate is equal to or more than 2% and not more than 10%. The void rate of the secondary particle is, for example, equal to or more than 2%, or might be equal to or more than 3%, or equal to or more than 5%. By making the void rate of the secondary particle be equal to or more than a predetermined value, it is possible to decrease the initial resistance of the lithium ion secondary battery 100. In addition, it is possible to secure the appropriate void inside the secondary particle of the lithium-transition metal complex oxide 56a. Additionally, in a case where the lithium-transition metal complex oxide 56a includes the covering part 56c, it is possible to evenly arrange the covering part 56c till the center C of the secondary particle. On the other hand, if the void rate of the secondary particle becomes excessive (typically, if the void rate exceeds 10%), the resistance increase at the storing time is increased. Accordingly, the void rate of the secondary particle is, for example, equal to or less than 10%, or might be equal to or less than 9%, or equal to or less than 8%. Incidentally, in the present description, the wording "average void rate of the lithium-transition metal complex oxide" is grasped from a cross section electron microscope image of the lithium-transition metal complex oxide, and the average value can be calculated by measuring the void rates of plural secondary particles being selected arbitrarily. Regarding the plural secondary particles, for example, it might be equal to or more than 20. At first, by performing a cross section polisher processing, or the like, a specimen for cross section observation of the lithium-transition metal complex oxide 56a is manufactured. Next, a scanning electron microscope (SEM) is used to obtain a SEM image of the specimen for cross section observation. Based on the obtained SEM image, an image analyzing software (for example, "Image J") is used so as to respectively obtain an area of the whole secondary particle and a total area of all voids inside the secondary particle. Then, Formula (ii) described below is used to obtain the void rate, so as to calculate the average value:

Void rate (%) = (Total area of all voids / Area of the whole secondary particle) $\times$ 100 (ii)

The void rate of the lithium-transition metal complex oxide 56a can be adjusted, for example, by changing a synthetic condition, when a hydroxide being a precursor of the lithium-transition metal complex oxide 56a is synthesized by a crystallization method. Particularly, in the crystallization method, a raw material aqueous solution containing a metal element other than the lithium and a pH adjustment liquid are added to a response liquid, so as to perform a synthesis of the hydroxide. By changing the pH value of the response liquid at that time and a stirring speed, it is possible to adjust the void rate of the hydroxide. By mixing this hydroxide and a chemical compound being a lithium source (for example, lithium hydroxide, or the like) and then baking the resultant, it is possible to obtain the lithium-transition metal complex oxide 56a which has been in the secondary particle form and in which the void rate has been adjusted.

ABET specific surface area of the lithium-transition metal complex oxide 56a is not particularly restricted. In order to implement imparting the outstanding output characteristic to the lithium ion secondary battery 100, the BET specific surface area of the lithium-transition metal complex oxide 56a is preferably 0.50 m$^2$/g to 0.85 m$^2$/g, or further preferably 0.55 m$^2$/g to 0.80 m$^2$/g. Incidentally, it is possible to use a commercially available specific surface area measuring apparatus so as to measure the BET specific surface area of the lithium-transition metal complex oxide 56a by a nitrogen adsorbent method.

The content amount of the positive electrode active material 56 in the positive electrode active material layer 54 (in other words, the content amount of the positive electrode active material 56 with respect to the total mass of the positive electrode active material layer 54), which is not particularly restricted, would be, for example, equal to or more than 80 mass%, preferably equal to or more than 87 mass%, further preferably equal to or more than 90 mass%, furthermore preferably equal to or more than 95 mass%, or the most preferably equal to or more than 97 mass%.

As the positive electrode current collector 52, it is possible to use a well known material used for the lithium ion secondary battery 100, and as an example of it, it is possible to use a sheet or a foil made from a metal having a favorable electrically conductive property (for example, aluminum, nickel, titanium, stainless steel, or the like). As the positive electrode current collector 52 in accordance with the present embodiment, an aluminum foil is preferable.

A size of the positive electrode current collector 52, which is not particularly restricted, could be suitably decided in accordance with a battery design. In a case where the aluminum foil is used as the positive electrode current collector 52, a thickness of the positive electrode current collector 52, which is not particularly restricted, would be, for example, equal to or more than 5 μm and not more than 35 μm, or preferably equal to or more than 7 μm and not more than 20 μm.

<Negative electrode>

The herein disclosed negative electrode (the negative electrode sheet 60) includes the negative electrode active material layer 64. As shown in FIG. 2, the negative electrode (the negative electrode sheet 60) includes the negative electrode current collector 62, and the negative electrode active material layer 64 supported on the negative electrode current collector 62. Incidentally, in the present practical example, the negative electrode active material layer 64 is shown, in figures, only on a surface at one side of the negative electrode current collector 62, but the negative electrode active material layer 64 might be provided on each of surfaces at both sides of the negative electrode current collector 62.

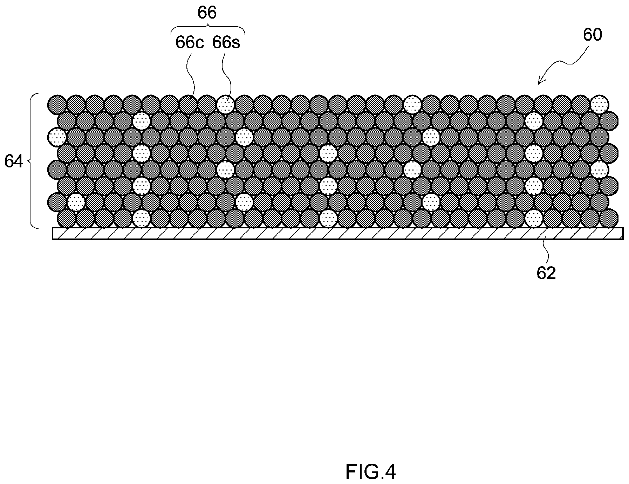

The negative electrode active material layer 64 contains the negative electrode active material 66 that can reversibly store and release the charge carrier. FIG. 4 is a schematic view that shows a configuration of the negative electrode sheet 60 (the negative electrode) in accordance with one embodiment. The negative electrode active material 66 in accordance with the present embodiment contains a carbon material 66c and a Si containing material 66s, as essential components. However, the negative electrode active material 66 might further contain the other negative electrode active material, in addition to the carbon material 66c and the Si containing material 66s. In addition, for convenience sake of explanation, although not shown in figures, the negative electrode active material layer 64 might contain an electrically conducting material, a binder, a thickening agent, or the like, in addition to the negative electrode active material 66.

As the carbon material 66c, for example, it is possible to use a graphite, a hard carbon, a soft carbon, or the like, and the graphite can be used suitably among them. The graphite might be a natural graphite or an artificial graphite, or might be an amorphous carbon covering graphite having a form in which the graphite is covered by the amorphous carbon material.

The average particle diameter of the carbon material 66c, which is not particularly restricted, would be, for example, equal to or more than 0.1 μm and not more than 50 μm, preferably equal to or more than 1 μm and not more than 25 μm, or further preferably equal to or more than 5 μm and not more than 20 μm. Incidentally, the average particle diameter (D50) of the carbon material can be obtained, for example, by a laser diffraction scattering method.

The Si containing material 66s is, for example, silicon (Si), a silicon oxide represented by $SiO_x$ (0.05 < x < 1.95), a Si-C composite containing a Si particle in a carbon particle, a lithium silicate ($Li_xSi_yO_z$), or the like. As the Si containing material 66s, it is possible to suitably use the silicon, the silicon oxide, and the Si-C composite. In addition, as the Si containing material 66s, it is possible to use an alloy consisting of Si and an element other than the Si. As the element other than the Si, it is possible to use, for example, Fe, Co, Sb, Bi, Pb, Ni, Cu, Zn, Ge, In, Sn, Ti, or the like. By containing the Si containing material 66s in the negative electrode active material 66, it is possible to suppress formation of a covering film layer in which the Mn eluted from the positive electrode active material works as a start point on the negative electrode active material layer 64 surface. Therefore, it is possible to suitably suppress the resistance increase at the storing time.

The average particle diameter of the Si containing material 66s, which is not particularly restricted, would be, for example, equal to or more than 0.1 μm and not more than 50 μm, preferably equal to or more than 1 μm and not more than 25 μm, or further preferably equal to or more than 5 μm and not more than 20 μm. Incidentally, the average particle diameter (D50) of the carbon material can be obtained, for example, by a laser diffraction scattering method.

In the present embodiment, when the total amount of the negative electrode active material 66 is treated as 100 mass%, the containing ratio of the Si element in the negative electrode active material 66 is, from a perspective of achieving both the effect of suppressing the resistance increase at the storing time and the capacity retention rate, equal to or more than 5 mass% and not more than 10 mass%. In a case where the containing ratio of the Si element is smaller (typically, less than 5 mass%), it is hard to suitably obtain the formation suppressing effect of the covering film layer in which the Mn eluted from the positive electrode active material works as the start point on the negative electrode active material layer 64 surface, and it is hard to suitably obtain the storage resistance suppressing effect. On the other hand, in a case where the containing ratio of the Si element is too high (typically, exceeding 10 mass%), the capacity retention rate at the storing time is reduced, and thus it is not preferable.

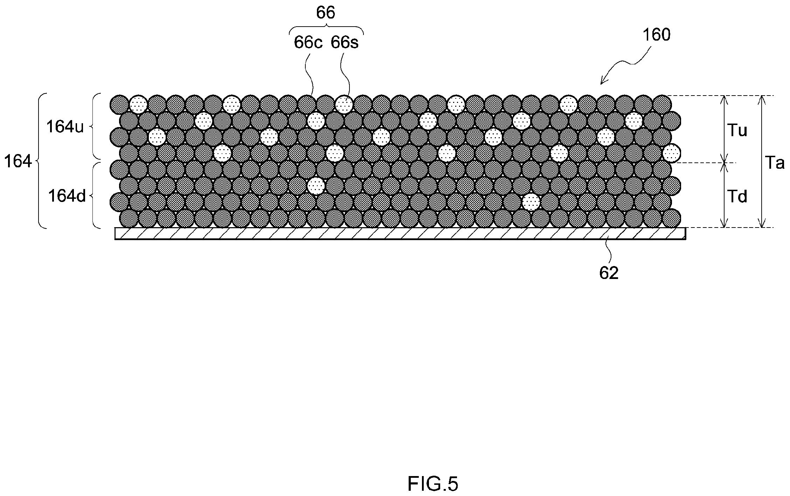

A distribution of the Si containing materials 66s in the negative electrode active material layer 64 is not particularly restricted, and the Si containing materials might be dispersed over the whole negative electrode active material layer 64, might be concentratedly dispersed on an upper layer of the negative electrode active material layer 64 (a surface layer side of the negative electrode active material layer 64) or might be concentratedly dispersed on a bottom layer of the negative electrode active material layer 64 (a negative electrode current collector 62 side). In some suitable aspects, it is preferable, as shown in a later described second embodiment (FIG. 5), that the Si containing materials 66s are concentratedly dispersed on the upper layer of the negative electrode active material layer 64 (corresponding to a negative electrode upper layer 164u of FIG. 5). As shown in FIG. 4, in the present embodiment, the Si containing materials 66s are dispersed in an approximately uniform manner over the whole negative electrode active material layer 64. Incidentally, the wording "concentratedly dispersed on the upper layer of the negative electrode active material layer 64" is an example of a herein disclosed wording "when the Si element in the whole negative electrode active material is treated as 100 mass%, the containing ratio of the Si element on the negative electrode upper layer is equal to or more than 90 mass%".

The negative electrode active material layer 64 might contain a component other than the negative electrode active material 66, such as electrically conducting material, binder, and thickening agent. As the binder, it is possible to use one conventionally used for the lithium secondary battery without particular restriction, for example, styrene butadiene rubber (SBR), polyvinylidene fluoride (PVDF), or the like. As the thickening agent, for example, it is possible to use carboxymethyl cellulose (CMC), or the like.

It is preferable that the negative electrode active material layer 64 further contains the electrically conducting material. As the electrically conducting material, it is possible to suitably use, for example, a carbon black (CB), such as acetylene black (AB) and Ketjen black, a carbon fiber, such as carbon nanotube (CNT) and vapor grown carbon fiber (VGCF), and a carbon material, such as activated carbon and graphite, and it is preferable to contain the CNT among them. By containing the CNT as the electrically conducting material, it is possible to suitably maintain the capacity retention rate. As the CNT, it is possible to use any of a single-walled carbon nanotube (SWCNT), a double-walled carbon nanotube (DWCNT), and a multi-walled carbon nanotube (MWCNT), and regarding them, it is possible to use a single one kind, or to combine 2 or more kinds so as to use the resultant. Regarding the negative electrode active material layer 64, in a case where the CNT is used as the electrically conducting material, it is preferable to use the SWCNT. In a case where the CNT is used as the electrically conducting material of the negative electrode active material layer 64, it is preferable to contain the CNT equal to or less than 0.5 mass% with respect to the whole negative electrode active material layer.

The content amount of the negative electrode active material 66 in the negative electrode active material layer 64 is preferably equal to or more than 90 mass%, or further preferably equal to or more than 95 mass% and not more than 99 mass%. The content amount of the binder in the negative electrode active material layer 64 is preferably equal to or more than 0.1 mass% and not more than 8 mass%, or further preferably equal to or more than 0.5 mass% and not more than 3 mass%. The content amount of the thickening agent in the negative electrode active material layer 64 is preferably equal to or more than 0.3 mass% and not more than 3 mass%, or further preferably equal to or more than 0.5 mass% and not more than 2 mass%.

A thickness of the negative electrode active material layer 64, which is not particularly restricted, would be, for example, equal to or more than 10 μm and not more than 200 μm, or preferably equal to or more than 20 μm and not more than 100 μm, in a case where the negative electrode active material layer 64 is provided only on the surface at one side of the negative electrode current collector 62. Additionally, in a case where the negative electrode active material layer 64 is provided on both surfaces of the negative electrode current collector 62, on one surface (regarding a thickness of each of one surface and the other one surface), it would be, for example, equal to or more than 10 μm and not more than 200 μm, or preferably equal to or more than 20 μm and not more than 100 μm.

As the negative electrode current collector 62, it is possible to use a well known negative electrode current collector used for the lithium ion secondary battery, and as an example of it, it is possible to use a sheet or a foil made from a metal having a favorable electrically conductive property (for example, copper, nickel, titanium, stainless steel, or the like). As the negative electrode current collector 62, a copper foil is preferable.

A size of the negative electrode current collector 62, which is not particularly restricted, could be suitably decided in accordance with the battery design. In a case where the copper foil is used as the negative electrode current collector 62, a thickness of the negative electrode current collector 62, which is not particularly restricted, would be, for example, equal to or more than 5 μm and not more than 35 μm, or preferably equal to or more than 7 μm and not more than 20 μm.

As the separator 70, it is possible to use various porous sheets similar to those conventionally used for the lithium ion secondary battery, and it is possible, as the example, to use a porous resin sheet consisting of a resin, such as polyethylene (PE) and polypropylene (PP). The porous resin sheet described above might have a single layer structure, or might have a plural layers structure configured with two or more layers (for example, a three layers structure in which PP layers are laminated on both surfaces of a PE layer). The separator 70 might include a heat resistance layer (HRL).

As the nonaqueous electrolyte 80, it is possible to use one similar to the conventional lithium ion secondary battery, and typically it is possible to use one in which a supporting salt is contained into an organic solvent (a nonaqueous solvent). As the nonaqueous solvent, it is possible to use an aprotic solvent, such as carbonates, esters, and ethers. Among them, the carbonates are preferable, since the decrease effect on a low temperature resistance due to the positive electrode material becomes particularly high. As an example of the carbonates, it is possible to use ethylene carbonate (EC), diethyl carbonate (DEC), dimethyl carbonate (DMC), ethyl methyl carbonate (EMC), monofluoroethylene carbonate (MFEC), difluoroethylene carbonate (DFEC), monofluoromethyl difluoromethyl carbonate (F-DMC), trifluoro dimethyl carbonate (TFDMC), or the like. For the nonaqueous solvent as described above, it is possible to use one consisted of singly 1 kind or consisted by suitably combining 2 or more kinds. As the supporting salt, for example, it is possible to suitably use a lithium salt, such as $LiPF_6$, $LiBF_4$, and lithium bis(fluorosulfonyl)imide (LiFSI). A concentration of the supporting salt is preferably equal to or more than 0.7 mol/L and not more than 1.3 mol/L.

Incidentally, the nonaqueous electrolyte 80 could contain a component, other than the above described nonaqueous solvent and supporting salt, which might be various additive agents, such as gas generating agent, covering film forming agent, dispersing agent, and thickening agent, if the effect of the present disclosure is not significantly spoiled. As the additive agent used for the nonaqueous electrolyte 80, for example, it is possible to use a positive and negative electrode covering film forming agent, such as vinylene carbonate (VC), fluoro ethylene carbonate (FEC), and 1,3-propane sultone (PS); an overcharge preventing agent, such as biphenyl (BP), cyclohexylbenzene (CHB), t-butylbenzene, and t-amylbenzene; or the like. Among them, it is preferable that the nonaqueous electrolyte 80 contains the FEC. In a case of containing the FEC as the additive agent in the nonaqueous electrolyte 80, it is preferable that the FEC is contained at a rate equal to or less than 20 vol% with respect to the nonaqueous electrolyte 80.

The positive electrode active material of the lithium ion secondary battery 100 configured as described above contains the lithium-transition metal complex oxide being a high Ni lithium-transition metal complex oxide, and includes the positive electrode active material in which the aspect ratio of the primary particle of the lithium-transition metal complex oxide is equal to or more than 1.9. In addition, the negative electrode active material of the lithium ion secondary battery 100 includes a negative electrode active material which contains the carbon material and the Si containing material and in which the containing ratio of the Si element in the negative electrode active material is equal to or more than 5 mass% and not more than 10 mass% when the total amount of the negative electrode active material is treated as 100 mass%. By doing this, it is possible to suppress the increase of the initial resistance and to inhibit the resistance increase at the storing time, while decreasing the cobalt content amount in the positive electrode active material.

While described in detail, the lithium-transition metal complex oxide having the layered structure typically includes a laminate structure in which a lithium layer, an oxygen layer, a transition metal layer, and the oxygen layer are repeatedly overlapped. Regarding the lithium-transition metal complex oxide, the Li ion is stored and released from a direction (the *a* axis) orthogonal to the laminate direction (the c axis). In a case where the lithium-transition metal complex oxide having the layered structure containing the Mn is used as the positive electrode active material, if the Co containing rate in the lithium-transition metal complex oxide is decreased, the stability of the lithium-transition metal complex oxide is reduced. Typically, since an interlayer of the lithium-transition metal complex oxide becomes narrow, the conductive property of the Li ion is reduced and thus the initial resistance is increased. In addition, by reducing the stability of the lithium-transition metal complex oxide, the Mn elution from the positive electrode active material layer (in particular, the lithium-transition metal complex oxide) becomes remarkable at the storing time. For example, the Mn eluted from the positive electrode active material layer is precipitated on the surface of the negative electrode active material layer (typically, a graphite surface), and furthermore a covering film growth occurs with the precipitated Mn being as the start point. By the covering film described above, a durability degradation of the lithium ion secondary battery occurs. Thus, conventionally, regarding the lithium ion secondary battery that uses the lithium-transition metal complex oxide as the positive electrode active material, the lithium-transition metal complex oxide having the layered structure containing the Mn and having the Co containing rate being decreased, there is a problem that deterioration of the initial resistance and the resistance increase at the storing time become larger.

In contrast to this matter, regarding the lithium ion secondary battery 100 in accordance with the present embodiment, in the lithium-transition metal complex oxide 56a, the Ni containing rate with respect to the total metal elements other than the Li is equal to or more than 75 mol%, and thus it is possible to inhibit the Mn rate in the lithium-transition metal complex oxide 56a. Then, the primary particle 56p in accordance with the present embodiment has the long shape whose aspect ratio is equal to or more than 1.9. According to the primary particle 56p having the configuration described above, regarding the lithium-transition metal complex oxide 56a, plural primary particles 56p are arranged to make the long diameter extend from the outer diameter OL to the center C so as to configure the secondary particle. An efficient diffusion passage of the Li ion from the surface (the outer diameter OL side) of the lithium-transition metal complex oxide 56a to the center C is configured, so as to make a diffusion winding road length be decreased. By doing this, the Li ion diffusion property of the lithium-transition metal complex oxide 56a is improved. Accordingly, it is possible to decrease the initial resistance. Furthermore, by the Si containing material 66s contained in the negative electrode active material 66, the precipitation of the Mn onto the negative electrode active material layer 64 surface is suppressed. By doing this, it is possible to inhibit the Mn covering film formation on the negative electrode active material layer 64 surface. Accordingly, even in a case where the Co containing rate in the lithium-transition metal complex oxide is decreased, the increase of the initial resistance is suppressed, and thus it is possible to provide the lithium ion secondary battery 100 in which the resistance increase at the storing time is suppressed.

The lithium ion secondary battery 100 can be used for various purposes. As a suitable purpose, it could be applied to a power supply for driving mounted on a vehicle, such as Battery Electric Vehicle (BEV), Hybrid Electric Vehicle (HEV), and Plug-in Hybrid Electric Vehicle (PHEV). In addition, the lithium ion secondary battery 100 can be used as a storage battery, such as small electric power storing apparatus. The lithium ion secondary battery 100 can be used in a form of a battery pack typically configured by connecting plural batteries in series and/or in parallel.

Incidentally, as an example, the square shaped lithium ion secondary battery 100 including the electrode body 20 having the flat shaped wound structure has been explained. However, the lithium ion secondary battery disclosed herein can be configured as a lithium ion secondary battery including a laminate type electrode body (in other words, an electrode body in which plural positive electrodes and plural negative electrodes are alternately laminated). The laminate type electrode body might include plural separators so as to dispose one separator at each position between the positive electrode and the negative electrode, or might be configured by turning one separator so as to alternately laminate the positive electrode and the negative electrode. In addition, the lithium ion secondary battery in accordance with the present embodiment can be constructed in a form, such as cylindrical type lithium ion secondary battery, coin type lithium ion secondary battery, and laminate type lithium ion secondary battery. Furthermore, it is possible to construct an all-solid state secondary battery in which the electrolyte is made to be a solid electrolyte.

<Second embodiment>

FIG. 5 is a FIG. 4 corresponding diagram of a negative electrode sheet 160 (the negative electrode) in accordance with a second embodiment. In FIG. 5, matters other than including the negative electrode active material layer 164 instead of the negative electrode active material layer 64 might be similar to the above described lithium ion secondary battery 100. As shown in FIG. 5, the negative electrode active material layer 164 has a so-called plural layers structure, including a negative electrode upper layer 164u and a negative electrode lower layer 164d.

In some suitable aspects, the negative electrode active material layer 164 in view of a thickness direction can include a negative electrode lower layer 164d connected to the negative electrode current collector 62 and a negative electrode upper layer 164u apart from the negative electrode current collector 62 more than the negative electrode lower layer 164d. However, the negative electrode active material layer 164 might have the plural layers structure configured with 3 or more layers. For example, between the negative electrode upper layer 164u and the negative electrode lower layer 164d, a layer having a composition different from the negative electrode upper layer 164u and from the negative electrode lower layer 164d might be further formed.

The negative electrode upper layer 164u is a layer positioned at a surface side more than the negative electrode lower layer 164d, when it is viewed in the thickness direction of the negative electrode active material layer 164. The negative electrode upper layer 164u is positioned apart from the negative electrode current collector 62 more than the negative electrode lower layer 164d. The negative electrode upper layer 164u herein configures the most surface layer of the negative electrode active material layer 164. In other words, the negative electrode upper layer 164u is positioned at the positive electrode (the positive electrode sheet 50) side more than the negative electrode lower layer 164d.

The negative electrode active material 66 in accordance with the negative electrode upper layer 164u includes the Si containing material 66s, as the essential component. When the Si element amount of the whole negative electrode active material layer 164 is treated as 100 mass%, the containing ratio of the Si element contained in the negative electrode upper layer 164u is preferably equal to or more than 90 mass%, further preferably equal to or more than 95 mass%, or furthermore preferably equal to or more than 98 mass%. Typically, the content amount of the Si element contained in the negative electrode upper layer 164u is larger than the content amount of the Si element contained in the negative electrode lower layer 164d. In other words, regarding the negative electrode active material layer 164, the Si elements are concentratedly dispersed at the positive electrode (the positive electrode sheet 50) side.

As described above, the Mn eluted from the positive electrode active material layer 54 (typically, the lithium-transition metal complex oxide 56a) is precipitated from the positive electrode (the positive electrode sheet 50) side on the negative electrode active material layer 64, in other words, from the surface layer of the negative electrode active material layer 164, so as to form the covering film. Here, by including the configuration in which the Si containing materials are concentratedly dispersed at the positive electrode (the positive electrode sheet 50) side, in other words, the negative electrode upper layer 164u side, on the negative electrode active material layer 164, it is possible to further efficiently implement an effect of suppressing the covering film formation on the negative electrode active material layer 164 surface due to the Mn. Accordingly, it is possible to suitably suppress the resistance increase at the storing time.

Incidentally, "containing ratio (mass%) of the Si element contained in the negative electrode upper layer when the Si element amount in the whole negative electrode active material layer is treated as 100%" in the present description can be calculated as described below. At first, by observing a cross section SEM image of the negative electrode active material layer 164, a thickness of the negative electrode upper layer is obtained. Next, with respect to a predetermined area of the negative electrode active material layer, the negative electrode active material layer corresponding to the thickness of the obtained negative electrode upper layer is scraped to collect a sample, and then to perform an ICP (Inductively Coupled Plasma) analysis, so as to calculate the Si element amount in the negative electrode upper layer. Regarding the negative electrode lower layer, similarly, the negative electrode active material layer corresponding to a predetermined area is scraped to collect the sample, and then to perform the ICP analysis, so as to calculate the Si element amount in the negative electrode lower layer. Then, based on values of the respectively obtained Si element amounts of the negative electrode upper layer and the negative electrode lower layer, it is possible to obtain the containing ratio of the Si element in the negative electrode upper layer with respect to the Si element amount of the whole negative electrode active material layer.

The content amount of the Si element contained in the negative electrode upper layer 164u is preferably equal to or more than 2 mass%, or further preferably equal to or more than 5 mass%, when a total of the negative electrode active material 66 of the negative electrode upper layer 164u is treated as 100 mass%.

The negative electrode lower layer 164d is a layer positioned at the negative electrode current collector 62 side more than the negative electrode upper layer 164u, when it is viewed in the thickness direction of the negative electrode active material layer 64. Here, the negative electrode lower layer 164d comes into contact with the negative electrode current collector 62.

The negative electrode active material 66 in accordance with the negative electrode lower layer 164d contains the carbon material 66c as the essential components. The negative electrode lower layer 164d might contain the Si containing material 66s, or might not contain the Si containing material 66s. The content amount of the Si element contained in the negative electrode lower layer 164d, which is not particularly restricted, might be, for example, equal to or less than 2 mass%, or preferably equal to or less than 1 mass%, when the negative electrode active material of the negative electrode lower layer 164d is treated as 100 mass%. The content amount of the C element contained in the negative electrode lower layer 164d, which is not particularly restricted, is preferably equal to or more than 98 mass%, or further preferably equal to or more than 99 mass%, when the negative electrode active material of the negative electrode lower layer 164d is treated as 100 mass%.

A ratio (Tu/Ta) of a thickness Tu of the negative electrode upper layer 164u with respect to a whole thickness Ta of the negative electrode active material layer 164 is, for example, equal to or less than 0.8, or might be preferably equal to or less than 0.7. By doing this, it is possible to disperse the Si containing materials 66s (in other words, the Si elements) in the negative electrode active material layer 164 to the positive electrode (the positive electrode sheet 50) side, and thus the effect of suppressing the covering film formation by the Mn is further efficiently expressed. Accordingly, it is possible to suitably suppress the resistance increase at the storing time. In addition, from a perspective of a filling ability, the ratio of the thickness Tu of the negative electrode upper layer 164u with respect to the whole thickness Ta of the negative electrode active material layer 164 is, for example, equal to or more than 0.4, or might be preferably equal to or more than 0.5. Incidentally, "ratio of the thickness of the negative electrode upper layer with respect to the whole thickness of the negative electrode active material layer" in the description is measured on the basis of the cross section SEM image of the negative electrode active material layer 164.

Incidentally, the negative electrode upper layer 164u and the negative electrode lower layer 164d as described above can be manufactured by a conventionally known method. Although not restricted to this, for example, it can be formed by using 2 or more kinds of negative electrode active materials 66 having different compositions (typically, containing ratios of the Si containing materials) from each other so as to prepare a slurry for forming the negative electrode active material layer and then by coating with the slurry for forming the negative electrode active material layer.

Below, a practical example related to the herein disclosed technique will be explained, which is not intended to restrict the herein disclosed technique to the practical example.

<Test example 1: Examination of positive electrode active material structure and Si presence or absence in negative electrode active material>

(Example 1)

[Manufacture of positive electrode sheet]

At first, the positive electrode active material in accordance with Example 1 was prepared. In particular, a hydroxide being a precursor was generated by a crystallization method. At that time, the chemical compound containing the ammonium ion was used as the alkaline compound, the pH of the response liquid was made to be 11, the $NH_3$ concentration was made to be 1.0 to 1.5 wt%, and the response time was made to be 40 hours, so as to generate the hydroxide. Then, when the obtained hydroxide and the lithium source were mixed so as to be baked, the baking temperature was set to be 770°C and the baking time was set to be 15 hours. By doing this, the lithium-transition metal complex oxide ($Li_1Ni_{0.83}Mn_{0.17}O_2$) (corresponding to 83/0/17 at "Ni/Co/Mn" column of Table 1) being formed in a secondary particle shape and having the layered structure was obtained whose aspect ratio of the primary particle was 1.9. Incidentally, the aspect ratio of the primary particle was measured by the above described method.

The above prepared positive electrode active material, acetylene black (AB) as the electrically conducting material, and polyvinylidene fluoride (PVDF) as the binder were mixed at a solid content mass ratio being positive electrode active material : AB : PVDF = 100 : 1 : 1. To the obtained mixture, a proper amount of N-methyl-2-pyrrolidone (NMP) was added and then kneaded, so as to prepare the slurry for forming the positive electrode active material layer. With the obtained slurry for forming the positive electrode active material layer, both surfaces of the positive electrode current collector made from an aluminum foil whose thickness was 15 $\mu$m were coated, the resultant was dried, and thus the positive electrode active material layer was formed. The obtained positive electrode active material layer was subjected to a roll press with a rolling roller, and then cut to have a predetermined size, and thus the positive electrode sheet in accordance with Example 1 was manufactured.

[Manufacture of negative electrode sheet]

At first, a graphite as the carbon material and a Si-C composite as the Si containing material were mixed to make the containing ratio of the Si element be 10 mass% and make the containing ratio of the C element be 90 mass% when the total amount of the negative electrode active material was treated as 100 mass%, and thus the negative electrode active material in accordance with Example 1 was manufactured.

The above prepared negative electrode active material, styrene butadiene rubber (SBR) as the binder, carboxymethyl cellulose (CMC) as the thickening agent, and single-walled carbon nanotube (SWCNT) as the electrically conducting material were mixed in an ion exchange water to satisfy a solid content mass ratio being negative electrode active material : SBR : CMC : SWCNT = 100 : 1 : 1 : 0.5, and thus the slurry for forming the negative electrode active material layer was prepared. With the obtained slurry for forming the negative electrode active material layer, the negative electrode current collector made from a copper foil whose thickness was 10 $\mu$m was coated, the resultant was dried, and thus the negative electrode active material layer was formed. The obtained negative electrode active material layer was subjected to the roll press with the rolling roller, and then cut to have a predetermined size. By doing this, the negative electrode sheet in accordance with Example 1 was manufactured in which the Si containing materials were dispersed in an approximately uniform manner over the whole negative electrode active material.

[Preparation of separator]

As the separator, a porous polyolefin sheet was prepared which had three layers structure of PP/PE/PE, and whose thickness was 20 $\mu$m.

[Preparation of nonaqueous electrolyte]

As the nonaqueous electrolyte, one in which LiPF6 as the supporting salt was dissolved at a concentration of 1 mol/L into a mix solvent containing ethylene carbonate (EC), ethyl methyl carbonate (EMC), dimethyl carbonate (DMC), and fluoro ethylene carbonate (FEC) at the volume ratio being EC : EMC : DMC : FEC = 25 : 40 : 30 : 5 was prepared.

[Manufacture of lithium ion secondary battery for evaluation]

The positive electrode sheet and the negative electrode sheet were superimposed with the separator being disposed between them, so as to obtain a laminate body. Then, the laminate body was wound to obtain a wound body, then the wound body was subjected to a pressing process to be formed in a flat shape, and thus an electrode body formed in the flat shape was obtained. To the electrode body, an electrical collector terminal was attached, the resultant was inserted into the battery case and welded, and then the nonaqueous electrolyte was injected. After that, by sealing the battery case, the lithium ion secondary battery for evaluation was manufactured.

[Initial charging process]

On the obtained lithium ion secondary battery for evaluation in accordance with Example 1, a constant current charge was performed under a 25°C temperature environment with a current value of 0.1 C as an initial charging process, till a voltage of 4.2 V, and then the constant voltage charge was performed until the current value reaches 1/20 C. After that, the constant current electric discharge was performed with the 0.1 C current value till 3.0 V

(Example 2)

Except for using the lithium-transition metal complex oxide in which W (tungsten) as the additive element was doped at 0.3 mol% to $Li_1Ni_{0.83}Mn_{0.17}O_2$, similarly to Example 1, the lithium ion secondary battery for evaluation in accordance with Example 2 was manufactured and then the initial charging process was performed.

(Example 3)

Except for making the aspect ratio of the primary particle in the lithium-transition metal complex oxide be 1.5, similarly to Example 1, the lithium ion secondary battery for evaluation in accordance with Example 3 was manufactured and then the initial charging process was performed. Incidentally, the aspect ratio of the primary particle was adjusted by controlling the pH of the response liquid, the $NH_3$ concentration, and the response time at the precursor producing time.

(Example 4)

Except for making the negative electrode active material be only the graphite (in other words, not containing the Si containing material), similarly to Example 1, the lithium ion secondary battery for evaluation in accordance with Example 4 was manufactured, and then the initial charging process was performed.

(Example 5)

Except for making the aspect ratio of the primary particle in the lithium-transition metal complex oxide be 1.5 and making the negative electrode active material be only the graphite (in other words, not containing the Si containing material), similarly to Example 1, the lithium ion secondary battery for evaluation in accordance with Example 5 was manufactured and then the initial charging process was performed.

[Evaluation of initial resistance]

Regarding the lithium ion secondary batteries for evaluation in accordance with Examples 1 to 5, at first, in 25°C thermostatic chamber, on each lithium ion secondary battery for evaluation, a constant current constant voltage (CCCV) charge was performed at 0.3 C current value, so as to adjust a SOC (State of Charge) being in 50% state. After that, a pulse electric discharge was performed at 5 C current value for 10 seconds. A voltage change amount ($\Delta V$) at this pulse electric discharge was obtained, and then the resistance value before storage (the initial resistance) was calculated with the below described Formula (I):

$$\text{Resistance value} = \text{Voltage change amount } (\Delta V) / \text{Current value (5 C)} \dots \text{(I)}$$

Results are shown in Table 1.

[Evaluation of storage resistance increasing rate]

On the lithium ion secondary batteries for evaluation in accordance with Examples 1 to 5 after the initial resistances were measured, adjustment was performed to have SOC 100% under 25°C temperature environment. Each of these lithium ion secondary batteries for evaluation was kept in 60°C thermostatic chamber, and then stored for 14 days. Then, by a method the same as the initial resistance, the resistance value after the storage was calculated. Then, a resistance increasing rate (%) was obtained by the below described Formula (II):

Resistance increasing rate (%) = (Resistance value after storage / Resistance value before storage) × 100     (ii)

Results are shown in Table 1.

[Capacity retention rate]

In parallel to evaluating the storage resistance increasing rate described above, an evaluation of the capacity retention rate was performed. In particular, regarding the lithium ion secondary batteries for evaluation in accordance with Examples 1 to 5, an electric discharge capacity measured at a resistance increasing rate evaluating time was treated as an initial capacity. After that, the electric discharge capacity of the lithium ion secondary battery for evaluation, which had been stored at the above described storage resistance increasing rate evaluation (in other words, after being stored at 60°C for 14 days) was obtained by a method similar to the initial capacity. Then, a capacity retention rate (%) in accordance with each example was obtained by the below described Formula (III):

Capacity retention rate (%) = Electric discharge capacity after 14 days storage / Initial capacity × 100     (iii)

Results are shown in Table 1.

[Table 1]

Table 1

| | Positive electrode | | | | Negative electrode | | Initial characteristic | Storing time | |
|---|---|---|---|---|---|---|---|---|---|
| | Ni/Co/Mn | Co/Mn ratio | Additive element | Primary particle aspect ratio | Composition | Si containing ratio (mass%) | Initial resistance | Capacity retention rate (%) | Resistance increasing rate (%) |
| Example 1 | 83 / 0 / 17 | 0 | - | 1.9 | Graphite + Si | 10 | 11.4 | 95.3 | 106 |
| Example 2 | 83 / 0 / 17 | 0 | W | 1.9 | Graphite + Si | 10 | 10.3 | 95.4 | 103 |
| Example 3 | 83 / 0 / 17 | 0 | - | 1.5 | Graphite + Si | 10 | 13.5 | 95.2 | 105 |
| Example 4 | 83 / 0 / 17 | 0 | - | 1.9 | Graphite | 0 | 11.1 | 95.5 | 124 |
| Example 5 | 83 / 0 / 17 | 0 | - | 1.5 | Graphite | 0 | 13.1 | 95.5 | 121 |

Based on the results of Example 1 and Example 5, regarding Example 1 in which the aspect ratio of the primary particle in the lithium-transition metal complex oxide was 1.9 and the negative electrode active material containing the carbon material and the Si containing material was used, in comparison to Example 5, both of the decrease in the initial resistance and the resistance increase at the storing time were suitably observed. On the other hand, regarding Example 3 using the positive electrode active material in which the aspect ratio of the primary particle in the lithium-transition metal complex oxide was 1.5, in comparison with Example 1, the decrease in the initial resistance was not observed. Thus, it is thought that using the lithium-transition metal complex oxide in which the aspect ratio of the primary particle is equal to or more than 1.9 can induce the decrease effect of the initial resistance. In addition, regarding Example 4 in which the negative electrode active material was made to be only the graphite (in other words, not containing the Si containing material), in comparison with Example 1, decreasing the resistance increasing rate at the storing time was not observed. It was found that, by satisfying both of making the aspect ratio of the primary particle in the lithium-transition metal complex oxide be equal to or more than 1.9 and of using the negative electrode active material containing the carbon material and the Si containing material, the effect of suppressing the resistance increase at the storing time could be suitably implemented.

Additionally, regarding Example 2 where the W is doped as the additive element to the lithium-transition metal complex oxide in addition to the configuration of Example 1, further favorable results for suppressing the initial resistance and the resistance increase at the storing time were obtained. As this reason, it can be thought that the layered structure of the lithium-transition metal complex oxide was stabilized by making the dope with the W, then the conductive property of the Li ion was enhanced, and additionally the elution of the Mn to the nonaqueous electrolyte was inhibited.

<Test example 2: Examination of Si rate>

(Examples 6 to 8)

Except for changing the containing ratio of the Si element with respect to the graphite as the carbon material and the Si-C composite as the Si containing material, when the total amount of the negative electrode active material was treated as 100 mass%, to be as shown at "Si containing ratio" column in Table 2, similarly to Example 1, the lithium ion secondary batteries for evaluation in accordance with Examples 6 to 8 were manufactured and then the initial charging process was performed. On the lithium ion secondary batteries for evaluation in accordance with Examples 6 to 8, an evaluation similar to Test example 1 was performed by the above described method. Results are shown in Table 2.

[Table 2]

Table 2

| | | Positive electrode | | | Negative electrode | | Initial characteristic | Storing time | |
|---|---|---|---|---|---|---|---|---|---|
| | | Ni/Co/Mn | Co/Mn ratio | Primary particle aspect ratio | Composition | Si containing ratio (mass%) | Initial resistance | Capacity retention rate (%) | Resistance increasing rate (%) |
| Example 4 | | 83 / 0 / 17 | 0 | 1.9 | Graphite | 0 | 11.1 | 95.5 | 124 |
| Example 6 | | 83 / 0 / 17 | 0 | 1.9 | Graphite + Si | 2 | 11.0 | 95.4 | 116 |
| Example 7 | | 83 / 0 / 17 | 0 | 1.9 | Graphite + Si | 5 | 11.2 | 95.5 | 105 |
| Example 1 | | 83 / 0 / 17 | 0 | 1.9 | Graphite + Si | 10 | 11.4 | 95.3 | 106 |
| Example 8 | | 83 / 0 / 17 | 0 | 1.9 | Graphite + Si | 13 | 11.6 | 94.6 | 106 |

As shown in the results of Table 2, regarding both of Example 7 and Example 1 in which the containing ratio of the Si element in the negative electrode active material was 5 mass% or 10 mass%, the resistance increase at the storing time was suitably suppressed and the reduction in the capacity retention rate was not observed. Regarding Example 6 in which the containing ratio of the Si element was 2 mass%, the effect of suppressing the resistance increase at the storing time was not implemented too much. As this reason, it is thought regarding Example 6 that the enough amount of Si containing materials to sufficiently suppress the Mn from being precipitated onto the negative electrode active material surface was not contained in the negative electrode. In addition, the increase suppressing effect for the battery resistance was more favorably expressed as the containing ratio of the Si element became higher, but regarding Example 8 in which the containing rate of the Si element was 13 mass%, it was observed that the capacity retention rate was reduced more than the other examples. Accordingly, from a perspective of securing both the effect of suppressing the resistance increase at the storing time and the capacity retention rate, it can be thought that, regarding the containing ratio of the Si element in the negative electrode active material, 5 to 10 mass% is a further suitable range.

<Test example 3: Examination of aspect ratio of primary particle>

(Examples 9 to 10)

Except for making the aspect ratio of the primary particle in the lithium-transition metal complex oxide be as shown in "primary particle aspect ratio" of Table 3, similarly to Example 1, the lithium ion secondary batteries for evaluation in accordance with Examples 9 to 10 were manufactured and then the initial charging process was performed. Incidentally, the aspect ratio of the primary particle was adjusted by controlling the pH of the response liquid, the $NH_3$ concentration, and the response time at the precursor producing time. In addition, the aspect ratio of the primary particle was measured by the above described method. On the lithium ion secondary batteries for evaluation in accordance with Examples 9 to 10, an evaluation similar to Test example 1 was performed by the above described method. Results are shown in Table 3.

[Table 3]

Table 3

| | Positive electrode | | | Negative electrode | | Initial characteristic | Storing time | |
|---|---|---|---|---|---|---|---|---|
| | Ni/Co/Mn | Co/Mn ratio | Primary particle aspect ratio | Composition | Si containing ratio (mass%) | Initial resistance | Capacity retention rate (%) | Resistance increasing rate (%) |
| Example 3 | 83 / 0 / 17 | 0 | 1.5 | Graphite + Si | 10 | 13.5 | 95.2 | 105 |
| Example 1 | 83 / 0 / 17 | 0 | 1.9 | Graphite + Si | 10 | 11.4 | 95.3 | 106 |
| Example 9 | 83 / 0 / 17 | 0 | 2.2 | Graphite + Si | 10 | 10.9 | 95.3 | 106 |
| Example 10 | 83 / 0 / 17 | 0 | 2.5 | Graphite + Si | 10 | 10.5 | 95.2 | 107 |

Based on the result of Table 3, in comparison to Example 3 in which the aspect ratio of the primary particle in the lithium-transition metal complex oxide was 1.5, regarding Example 1, Example 9, and Example 10 in which the aspect ratio of the primary particle was made to be equal to or more than 1.9, favorable results for the initial resistance were obtained in any of examples. As this reason, it is thought that, by making the aspect ratio be equal to or more than 1.9, the efficient diffusion passage for the Li ion was configured in the secondary particle form and that, by decreasing the diffusion winding road length, the Li ion diffusion property of the lithium-transition metal complex oxide 56a was improved. In addition, based on the results of Example 1, Example 9, and Example 10, a tendency was observed that more favorable initial resistance was obtained as the aspect ratio of the primary particle was larger.

<Test example 4: Examination of covering part>

(Example 11)

With the configuration of the lithium-transition metal complex oxide being similar to Example 1, similarly to Example 1, except for using the positive electrode active material in which the 1 mol% $LiBO_2$ based on the boron conversion with respect to the total amount 100 mol% of the metal elements other than Li in the lithium-transition metal complex oxide was arranged on the surface of the lithium-transition metal complex oxide, the lithium ion secondary battery for evaluation in accordance with Example 11 was manufactured and then the initial charging process was performed.

(Example 12)

Except for using the positive electrode active material in which $Al_2O_3$ was arranged in addition to the $LiBO_2$ as the covering part on the surface of the lithium-transition metal complex oxide, similarly to Example 1, the lithium ion secondary battery for evaluation in accordance with Example 12 was manufactured and then the initial charging process was performed. Incidentally, a rate of the $LiBO_2$ and the $Al_2O_3$ was set to be a mol rate of $LiBO_2$ : $Al_2O_3$ = 1 : 0.5 based on respective Li and Al conversions with respect to a total amount 100 mol% of the metal elements other than the Li of the lithium-transition metal complex oxide.

On the lithium ion secondary batteries for evaluation in accordance with Examples 11 and 12, an evaluation similar to Test example 1 was performed by the above described method. Results are shown in Table 4.

[Table 4]

Table 4

| | Positive electrode | | | | Negative electrode | | Initial characteristic | Storing time | |
|---|---|---|---|---|---|---|---|---|---|
| | Ni/Co/Mn | Co/Mn ratio | Covering part | Primary particle aspect ratio | Composition | Si containing ratio (mass%) | Initial resistance | Capacity retention rate (%) | Resistance increasing rate (%) |
| Example 1 | 83 / 0 / 17 | 0 | - | 1.9 | Graphite + Si | 10 | 11.4 | 95.3 | 106 |
| Example 11 | 83 / 0 / 17 | 0 | $LiBO_2$ | 1.9 | Graphite + Si | 10 | 122 | 95.4 | 102 |
| Example 12 | 83 / 0 / 17 | 0 | $LiBO_2+Al_2O_3$ | 1.9 | Graphite + Si | 10 | 12.1 | 95.5 | 101 |

As shown in the results of Table 4, regarding Example 11 in which the $LiBO_2$ was arranged as the covering part on the surface of the lithium-transition metal complex oxide, further favorable results were obtained for suppressing the resistance increase at the storing time. In addition, regarding the Example 12 in which the $Al_2O_3$ was contained as the covering part in addition to the $LiBO_2$, furthermore favorable results were obtained for suppressing the resistance increase at the storing time. As this reason, by making the boron compound be arranged on the lithium-transition metal complex oxide surface, it is thought that the boron compound inhibits the response area with the nonaqueous electrolyte and the lithium-transition metal complex oxide, and has a function of suppressing the Mn elution. In addition, the aluminum oxide has a function of trapping the hydrogen fluoride gas generated by decomposition of the nonaqueous electrolyte. Thus, regarding Example 11 and Example 12, it is thought that the favorable results for suppressing the resistance increase at the storing time was obtained.

<Test example 5: Examination of Ni mixing ratio in positive electrode active material>

(Examples 13 to 19)

Except for changing the composition (mol ratio) of the Ni, the Co, and the Mn of the lithium-transition metal complex oxide to be as shown at "Ni/Co/Mn" column in Table 5, similarly to Example 1, the lithium ion secondary batteries for evaluation in accordance with Examples 13 to 19 were manufactured and then the initial charging process was performed. Incidentally, any of the mol rates (Li /(Ni + Co + Mn)) of the Li with respect to totals of the transition metal element (Ni + Co + Mn) of the lithium-transition metal complex oxide in accordance with Examples 13 to 19 were set to be 1.0 mol%. On the lithium ion secondary batteries for evaluation in accordance with Examples 13 to 19, an evaluation similar to Test example 1 was performed by the above described method. Results are shown in Table 5.

[Table 5]

Table 5

| | | Positive electrode | | | Negative electrode | | Initial characteristic | Storing time | |
|---|---|---|---|---|---|---|---|---|---|
| | | Ni/Co/Mn | Co/Mn ratio | Primary particle aspect ratio | Composition | Si containing ratio (mass%) | Initial resistance | Capacity retention rate (%) | Resistance increasing rate (%) |
| Example 1 | | 83 / 0 / 17 | 0 | 1.9 | Graphite + Si | 10 | 11.4 | 95.3 | 106 |
| Example 13 | | 83 / 1 / 16 | 0.06 | 1.9 | Graphite + Si | 10 | 11.4 | 95.3 | 105 |
| Example 14 | | 83 / 3 / 14 | 0.21 | 1.9 | Graphite + Si | 10 | 11.2 | 95.4 | 105 |
| Example 15 | | 83 / 5 / 12 | 0.42 | 1.9 | Graphite + Si | 10 | 11.0 | 95.4 | 105 |
| Example 16 | | 95 / 0 / 5 | 0 | 1.9 | Graphite + Si | 10 | 11.2 | 95.2 | 106 |
| Example 17 | | 95 / 1 / 4 | 0.25 | 1.9 | Graphite + Si | 10 | 11.1 | 95.3 | 105 |
| Example 18 | | 75 / 0 / 25 | 0 | 1.9 | Graphite + Si | 10 | 11.5 | 95.5 | 105 |
| Example 19 | | 75 / 5 / 20 | 0.25 | 1.9 | Graphite + Si | 10 | 11.2 | 95.4 | 106 |

As shown in the results of Table 5, regarding Example 1 and Examples 13 to 15 in which the Ni mixing rate of the lithium-transition metal complex oxide was 83 mol%, even in a case where the Co containing rate of the lithium-transition metal complex oxide was decreased, both of the resistance suppressing effect at the storing time and the capacity retention rate were stably achieved. In addition, regarding Examples 16 to 17 in which the Ni mixing rate of the lithium-transition metal complex oxide was 95 mol% and Examples 18 to 19 in which the Ni mixing rate of the lithium-transition metal complex oxide was 75 mol%, similarly, achieving both of the resistance suppressing effect at the storing time and the capacity retention rate was observed. Additionally, in view of the Co/Mn ratio of the lithium-transition metal complex oxide, regarding Example 15 in which the Co/Mn ratio was 0.42, suitably, achieving both of the resistance suppressing effect at the storing time and the capacity retention rate was observed.

<Test example 6: Examination of Si containing material distribution in negative electrode active material layer>

(Examples 20 to 21)

Except for making the negative electrode active material be only the graphite (in other words, when the total amount of the negative electrode active material was treated as 100 mass%, the Si element containing ratio was 0 mass% and the C element containing ratio was 100 mass%), similarly to Example 1, a first slurry for forming the negative electrode active material layer was prepared.

Similarly, except for making the graphite and the Si-C composite have the Si element containing ratio being 20 mass% and the C element containing ratio being 80 mass% when the total amount of the negative electrode active material was treated as 100 mass%, similarly to Example 1, a second slurry for forming the negative electrode active material layer was prepared.

The negative electrode current collector made of the copper foil the same as one used in Example 1 was coated with the first slurry for forming the negative electrode active material layer, dried, and then subjected to the roll press to have a predetermined density by the rolling roller. Then, the dried covering film of the first slurry for forming the negative electrode active material layer was coated with the second slurry for forming the negative electrode active material layer, dried, and then subjected to the roll press to have a predetermined density by the rolling roller. At that time, the thickness of the second slurry for forming the negative electrode active material layer was adjusted to be 0.5 with respect to the thickness of the whole negative electrode active material layer. By doing this, the negative electrode sheet of Example 20 was obtained in which the negative electrode lower layer formed with the first slurry for forming the negative electrode active material layer and the negative electrode upper layer formed with the second slurry for forming the negative electrode active material layer were supported on the negative electrode current collector. Incidentally, regarding the negative electrode sheet of Example 20, the Si element containing ratio of the negative electrode upper layer was 99 mass% when the Si element of the whole negative electrode active material was treated as 100 mass%.

Similarly, the negative electrode current collector made of the copper foil being the same as one used in Example 1 was coated with the second slurry for forming the negative electrode active material layer, dried, and then subjected to the roll press to have a predetermined density by the rolling roller. Then, the dried covering film of the second slurry for forming the negative electrode active material layer was coated with the first slurry for forming the negative electrode active material layer, dried, and then subjected to the roll press to have a predetermined density by the rolling roller. At that time, a thickness of the first slurry for forming the negative electrode active material layer was adjusted to be 0.5 with respect to the thickness of the whole negative electrode active material layer. Thus, the negative electrode sheet of Example 21 was obtained in which the negative electrode lower layer formed with the second slurry for forming the negative electrode active material layer and the negative electrode upper layer formed with the first slurry for forming the negative electrode active material layer were supported on the negative electrode current collector. Regarding the negative electrode sheet of Example 21, the Si element containing ratio of the negative electrode upper layer was 1 mass% when the Si element of the whole negative electrode active material was treated as 100 mass%.

Except for using the negative electrode sheet described above, similarly to Example 1, the batteries for evaluation in accordance with Example 20 and Example 21 were manufactured and then the initial charging process was performed. On the lithium ion secondary batteries for evaluation in accordance with Example 20 and Example 21, an evaluation similar to Test example 1 was performed by the above described method. Results are shown in Table 6.

[Table 6]

Table 6

| | Positive electrode | | | Negative electrode | | | Initial characteristic | Storing time | |
|---|---|---|---|---|---|---|---|---|---|
| | Ni/Co/Mn | Co/Mn ratio | Primary particle aspect ratio | Composition | Si containing ratio (mass%) | Si distribution | Initial resistance | Capacity retention rate (%) | Resistance increasing rate (%) |
| Example 1 | 83 / 0 / 17 | 0 | 1.9 | Graphite + Si | 10 | Whole | 11.4 | 95.3 | 106 |
| Example 20 | 83 / 0 / 17 | 0 | 1.9 | Graphite + Si | 10 | Concentrated on negative electrode upper layer | 11.4 | 95.4 | 104 |
| Example 21 | 83 / 0 / 17 | 0 | 1.9 | Graphite + Si | 10 | Concentrated on negative electrode lower layer | 11.5 | 95.4 | 110 |
| Example 4 | 83 / 0 / 17 | 0 | 1.9 | Graphite | 0 | - | 11.1 | 95.5 | 124 |

As shown in the results of Table 6, regarding any of Example 1, Example 20, and Example 21, the effect of suppressing the resistance increase at the storing time was observed, in comparison to Example 4 in which only the graphite was used as the negative electrode active material. In view of Examples 1, 20 and 21, each of which had the Si mixing rates being 10 mass%, there were almost no differences in the respective capacity retention rates at the storing time on the distributions of the Si containing materials. In addition, when Example 1, Example 20, and Example 21 are compared, the result was obtained in Example 1 whose Si containing materials were uniformly dispersed over the whole negative electrode active material layer that the effect of suppressing the resistance increasing rate at the storing time was favorable, and the result was obtained in Example 20 whose Si containing materials were concentratedly arranged on the upper layer that suppressing the resistance increasing rate at the storing time was further favorable. The reasons for these things are thought that, by concentratedly arranging the Si containing materials on the upper layer of the negative electrode active material, the effect of suppressing the Mn precipitation due to the Si containing material was efficiently expressed on the negative electrode active material surface.

Above, a preferred embodiment of the present disclosure has been explained, but the above described embodiment is merely an example. The present disclosure can be implemented in various other forms. The present disclosure can be executed based on the contents disclosed in the present description, and the technical common sense in the present field. The technique recited in the appended claims includes variously deformed or changed versions of the embodiments that have been illustrated above. For example, it is possible to replace a part of the above described embodiment with a different modified example, and a different modified example could be added to the above described embodiment. In addition, unless a technical feature is explained to be essential, this technical feature can be appropriately deleted.

While described above, as a particular aspect of the herein disclosed technique, it is possible to use a recitation of each item described below.

Item 1: A lithium ion secondary battery, comprising a positive electrode; a negative electrode; a separator; and a nonaqueous electrolyte, wherein the positive electrode comprises a positive electrode active material layer that contains a positive electrode active material, the positive electrode active material comprises a lithium-transition metal complex oxide that contains Li, Ni, and Mn and that has a layered structure, the lithium-transition metal complex oxide has a containing rate of the Ni equal to or more than 75 mol% with respect to a total of metal elements other than the Li, and is a secondary particle consisted by a primary particle being aggregated, an aspect ratio of the primary particle is equal to or more than 1.9, the negative electrode comprises a negative electrode active material layer that contains a negative electrode active material, the negative electrode active material contains a carbon material and a Si containing material, and when a total amount of the negative electrode active material is treated as 100 mass%, a containing ratio of a Si element in the negative electrode active material is equal to or more than 5 mass% and not more than 10 mass%.

Item 2: The lithium ion secondary battery recited in item 1, wherein the lithium-transition metal complex oxide is represented by a following general chemical formula: $Li_\alpha Ni_x Mn_y M_z O_2$ (incidentally, $0.8 \leq \alpha \leq 1.2$, $0.75 \leq x \leq 0.95$, $0.05 \leq y \leq 0.25$, $0 \leq z \leq 0.2$, $x + y + z = 1$, and M is equal to or more than 1 kind selected from Mg, Ca, Co, Al, Ti, V, Cr, Zr, Nb, Mo, Hf, Ta, and W).

Item 3: The lithium ion secondary battery recited in item 1 or 2, wherein in the lithium-transition metal complex oxide, a content amount (mol) of a Co element and a content amount (mol) of a Mn element satisfy a below described relation: $0 \leq Co/Mn \leq 0.42$.

Item 4: The lithium ion secondary battery recited in any one of items 1 to 3, wherein the lithium-transition metal complex oxide contains W.

Item 5: The lithium ion secondary battery recited in any one of items 1 to 4, wherein the aspect ratio of the primary particle is equal to or less than 2.5.

Item 6: The lithium ion secondary battery recited in any one of items 1 to 5, further comprising a covering part that is arranged on at least a part of a surface of the lithium-transition metal complex oxide, wherein the covering part contains a boron compound.

Item 7: The lithium ion secondary battery recited in item 6, wherein the covering part further contains an aluminum oxide.

Item 8: The lithium ion secondary battery recited in any one of items 1 to 7, wherein the negative electrode further comprises a negative electrode current collector, the negative electrode active material layer, viewed in a thickness direction, comprises a negative electrode lower layer coming into contact with the negative electrode current collector, and comprises a negative electrode upper layer apart from the negative electrode current collector more than the negative electrode lower layer, and when the Si element of a whole of the negative electrode active material is treated as 100 mass%, the containing ratio of the Si element of the negative electrode upper layer is equal to or more than 90 mass%.

Item 9: The lithium ion secondary battery recited in item 8, wherein a ratio of a thickness of the negative electrode upper layer with respect to a whole thickness of the negative electrode active material layer is equal to or more than 0.4 and not more than 0.8.

Item 10: The lithium ion secondary battery recited in any one of items 1 to 9, wherein the Si containing material contains 1 or more kinds selected from Si, silicon oxide, and a Si-C composite.

**Claims**

1. A lithium ion secondary battery (100), comprising a positive electrode (50); a negative electrode (60, 160); a separator (70); and a nonaqueous electrolyte (80), wherein

   the positive electrode (50) comprises a positive electrode active material layer (54) that contains a positive electrode active material (56),
   the positive electrode active material (56) comprises a lithium-transition metal complex oxide (56a) that contains Li, Ni, and Mn and that has a layered structure,
   the lithium-transition metal complex oxide (56a) has a containing rate of the Ni equal to or more than 75 mol% with respect to a total of metal elements other than the Li, and is a secondary particle consisted by a primary particle (56p) being aggregated, an aspect ratio of the primary particle (56p) is equal to or more than 1.9,
   the negative electrode (60, 160) comprises a negative electrode active material layer (64, 164) that contains a negative electrode active material (66),
   the negative electrode active material (66) contains a carbon material (66c) and a Si containing material (66s), and when a total amount of the negative electrode active material (66) is treated as 100 mass%, a containing ratio of a Si element in the negative electrode active material (66) is equal to or more than 5 mass% and not more than 10 mass%.

2. The lithium ion secondary battery (100) according to claim 1, wherein

   the lithium-transition metal complex oxide (56a) is represented by a following general chemical formula:

   $$Li_\alpha Ni_x Mn_y M_z O_2$$

   (incidentally, $0.8 \leq \alpha \leq 1.2$, $0.75 \leq x \leq 0.95$, $0.05 \leq y \leq 0.25$, $0 \leq z \leq 0.2$, $x + y + z = 1$, and M is equal to or more than 1 kind selected from Mg, Ca, Co, Al, Ti, V, Cr, Zr, Nb, Mo, Hf, Ta, and W).

3. The lithium ion secondary battery (100) according to claim 1 or 2, wherein
   in the lithium-transition metal complex oxide (56a), a content amount (mol) of a Co element and a content amount (mol) of a Mn element satisfy a below described relation:

   $$0 \leq Co/Mn \leq 0.42.$$

4. The lithium ion secondary battery (100) according to any one of claims 1 to 3, wherein
   the lithium-transition metal complex oxide (56a) contains W.

5. The lithium ion secondary battery (100) according to any one of claims 1 to 4, wherein
   the aspect ratio of the primary particle (56p) is equal to or less than 2.5.

6. The lithium ion secondary battery (100) according to any one of claims 1 to 5, further comprising a covering part (56c) that is arranged on at least a part of a surface of the lithium-transition metal complex oxide (56a), wherein
   the covering part (56c) contains a boron compound.

7. The lithium ion secondary battery (100) according to claim 6, wherein
   the covering part (56c) further contains an aluminum oxide.

8. The lithium ion secondary battery (100) according to any one of claims 1 to 7, wherein

   the negative electrode (60, 160) further comprises a negative electrode current collector (62),
   the negative electrode active material layer (64, 164), viewed in a thickness direction, comprises a negative electrode lower layer (164d) coming into contact with the negative electrode current collector (62), and comprises a negative electrode upper layer (164u) apart from the negative electrode current collector (62) more than the negative electrode lower layer (164d), and
when the Si element of a whole of the negative electrode active material (66) is treated as 100 mass%, the containing ratio of the Si element of the negative electrode upper layer (164u) is equal to or more than 90 mass%.

9. The lithium ion secondary battery (100) according to claim 8, wherein
a ratio of a thickness of the negative electrode upper layer (164u) with respect to a whole thickness of the negative electrode active material layer (64, 164) is equal to or more than 0.4 and not more than 0.8.

10. The lithium ion secondary battery (100) according to any one of claims 1 to 9, wherein
the Si containing material (66s) contains 1 or more kinds selected from Si, silicon oxide, and a Si-C composite.

1/5

FIG.1

FIG.2

FIG.3

FIG.4

FIG.5

EP 4 459 696 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017191662 A